# EUROPEAN PATENT APPLICATION

(11) **EP 4 198 302 A1**
(43) Date of publication of application: **21.06.2023**
(21) Application number: 21214654.2
(22) Date of filing: 15.12.2021
(51) Int. Cl.: F03D 13/25, F03D 80/80, H01R 13/46

(54) **WIND TURBINE WITH SEGMENTED CABLE ARRANGEMENT**

(71) Applicant: Siemens Gamesa Renewable Energy A/S, 7330 Brande (DK)
(72) Inventor: CHRISTIANSEN, Carsten, 6000 Kolding (DK); BRIX, Jens, 8700 Horsen (DK); KIOLBASSA, Dominik, 21244 Buchholz (DE); SKANDERUP, Soeren, Vejle (DK)
(74) Representative: SGRE-Association

(57) **Abstract**

A wind turbine (1) comprises a tower (4) composed of a plurality of tower sections (11-14), and an upper section on top of the tower (4). The upper section has a nacelle (3) and a rotor (2) with rotor blades (9). The rotor (2) is attached to the nacelle (3). The rotor blades (9) are rotatable by wind around a horizontal rotor axis to drive a generator (5) in the nacelle (3). The wind turbine (1) comprises a HV cable arrangement (21) laid in the tower (4) connecting a first HV component in the nacelle and a second HV component in a wind turbine tower bottom or foundation. The HV cable arrangement (21) is divided into a plurality of cable arrangement segments (22-26) corresponding to the plurality of tower sections (11-14), where respective two of the cable arrangement segments (22-26) are connected via a cable connection device (27-30) such that the plurality of cable arrangement segments (22-26) is connected in series to constitute the HV cable arrangement (21). The cable connection device (27-30) comprises a plate-based shielding.

## Description

The present invention relates to a wind turbine.

A wind turbine is an apparatus to convert the wind's kinetic energy into electrical energy. The wind turbine comprises, for example, a rotor having one or more blades, a nacelle including a generator, converter and transformer and a tower holding, at its top end, the nacelle. The tower of the wind turbine may be connected, via a transition piece, to a foundation of the wind turbine, such as, but not limited to, a monopile in a seabed.

The transformer in the nacelle and a further high voltage component, such as a switch gear, in the wind turbine tower bottom or foundation are connected via a high-voltage (HV) cable arrangement. So far, the HV cable arrangement has been installed in one piece constituting one full cable length. As the wind turbines and their towers are increasing their size, installation of a full-length cable after having erected the tower is becoming more complicated.

The tower of a wind turbine is nowadays composed of a plurality of tower sections. JP 2010 - 268 595 A suggests to divide the HV cable arrangement into a plurality of cable arrangement segments corresponding to the plurality of tower sections. Respective two of the cable arrangement segments are connected by a cable connection portion arranged near the connection portion of the adjacent tower sections. Such, the method for lying the HV cable in the tower of the wind turbine becomes easier.

It is an object of the present invention to provide a wind turbine that enables an easy installation of a cable arrangement in a tower which where the cable connection portion has improved properties.

This object is solved by a wind turbine according to the features of claim 1. Preferred embodiments are set out in the dependent claims.

According to the invention, a wind turbine is provided comprising a tower composed of a plurality of tower sections. The number of tower sections may be two or more but is, in general, arbitrary. An upper section on top of the tower has a nacelle and a rotor with rotor blades. The rotor is attached to the nacelle and the rotor blades are rotatable by wind around a horizontal rotor axis to drive a generator in the nacelle. The generator is connected to the transformer via a converter.

A high voltage (HV) cable arrangement is laid in the tower and connects a first HV component, such as the transformer, in the nacelle and a second HV component, such as a switch gear, in the wind turbine tower bottom or foundation. The HV cable arrangement is divided into a plurality of cable arrangement segments corresponding to the plurality of tower sections. Respective two of the cable arrangement segments are connected via a cable connection device such that a plurality of cable arrangement segments is connected in series to constitute the HV cable arrangement.

The phrase "the HV cable arrangement being divided into a plurality of cable arrangement segments corresponding to the plurality of tower sections" is to be understood that a cable arrangement segment is provided within a respective tower section. However, to connect the first HV component and the second HV component via the plurality of cable arrangement segments, the number of cable arrangement segments and the number of tower sections may vary by one to connect the first HV component in the nacelle to the cable connection device located in, but not limited to, the topmost of the tower sections.

According to the invention, the cable connection device comprises a plate-based shielding.

According to the invention, the wind turbine tower and the cable arrangement are divided into a respective number of tower sections allowing for pre-installation of the cable arrangement segments and thus enabling fast assembly when desired. The pre-assembled structures may then be transported to the final construction site, e.g. an offshore wind park consisting of a plurality of wind turbines. The final tower installation can then take place offshore, thereby connecting free ends of the cable arrangement segments to assigned cable connection devices.

One the one hand, the plate-based shielding facilitates the final installation of the cable arrangement segments. On the other hand, the plate-based shielding provides a safe shield in the event of an arc flash accident during operation. Though, the plate-based shielding enables access to the HV components inside the cable connection device and allows for controlling the effects of faults inside the cable connection device.

According to a preferred embodiment, the cable connection device has a cabinet composed of a bottom panel, at least one side wall, and a top panel. Thus, the cable connection device may be a metal plate-based box.

Preferably, the cabinet is closed on all sides and has at least one maintenance door or flap for having access to its interior. The maintenance door may be realized at the top panel and/or at least one of the side walls.

According to a further preferred embodiment, the cabinet, though being a closed casing, comprises a pressure release mechanism. The pressure release mechanism may be in the bottom of the panel. Placing the pressure release mechanism in the bottom panel enables for an arc flash blast to be directed in a specified direction of the tower section being located below the cable connection device. Since no further platform is typically located below the platform on which the cabinet is provided, there is a huge volume of air in tower section below to which the energy can be released. Consequently, there is no or significantly reduced danger of injury for people being in the tower section below.

For example, the pressure release mechanism comprises a perforated plate and/or an explosion hatch and/or a relief of overpressure.

According to a further preferred embodiment, the cabinet of the cable connection device comprises a first cable bushing through which a first cable arrangement segment is guided into the interior of the cable connection device and a second cable bushing through which a second cable arrangement segment is guided into the interior of the cable connection device. The first cable arrangement segment and the second cable arrangement segment are vertically connected with each other using an end termination within the cable connection device. This embodiment allows to guide two cable segments to enter the interior of the cable connection device in a specified way. The connection between the free ends of the cable arrangement segments takes place inside the cable connection device by means of end terminations which can be of a conventional type.

The first and the second cable bushings may be provided in the same side panel of the cabinet. Alternatively, they may be provided in different side panels of the cabinet.

According to a further preferred embodiment, the HV cable arrangement and each of the cable arrangement segments comprises a multi-phase cable, where all phases of respective two of the multi-phase cables are connected via the cable connection device.

Alternatively, the HV cable arrangement and at least some of the cable arrangement segments comprise a plurality of single-phase cables, where each phase of respective two of the single-phase cables are connected via a respective cable connection device. According to this embodiment, one cable connection device per phase may be provided. Alternatively, respective bushings for each phase of the respective two of the single-phase cables are provided to a single cabinet.

According to a further preferred embodiment, each of the tower sections has an upper flange and a lower flange, the upper flange of a first tower section and the lower flange of a second tower section being fixed to each other thereby providing a platform in the tower, where a cable connection device is located on the platform. The platform may be placed adjacent to the upper flange thereby allowing a worker to bolt the corresponding tower sections to each other when assembling the tower. However, the platform may be located adjacent to the lower flange as well.

According to a further preferred embodiment, the platform has one or more openings corresponding to the pressure release mechanism of the bottom panel. This allows for an arc flash blast to be directed in a specified direction in the area below the cable connection device, i.e. the tower section below.

Further embodiments, features and advantageous of the present invention will become apparent from the subsequent description, taken in conjunction with the accompanying drawings, in which:
- Fig. 1: shows in a partial cross-section, a wind turbine according to the present embodiment;
- Fig. 2: shows a perspective view of a cable connection device according to the invention;
- Fig. 3: illustrates a side view of the cable connection device according to Fig. 2, in which a side panel is removed;
- Fig. 4: shows a bottom panel of the cable connection device of Fig. 2 from below;
- Fig. 5: shows a perspective view of the cable connection device located on a platform of a not shown tower section; and
- Fig. 6: shows a perspective view of the cable connection device located on a platform of a not shown tower section.

In the figures, like reference numerals designate like or functionally equivalent elements, unless otherwise indicated.

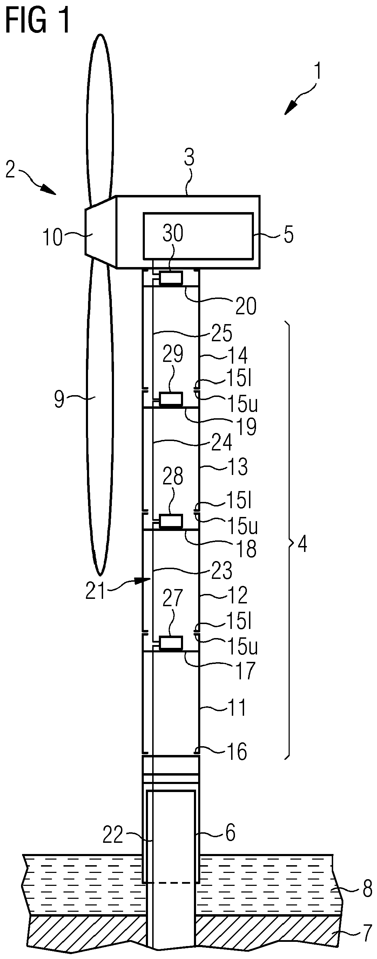

Fig. 1 shows an offshore wind turbine 1 according to an embodiment of the invention. The wind turbine 1 comprises a rotor 2 connected, via an energy conversion system to a transformer 5 arranged inside a nacelle 3. The energy conversion system which is not shown comprises a generator and a converter. The nacelle 3 is arranged on top of a tower 4 of the wind turbine 1. The rotor 2 comprises, for example, three rotor blades 9. The rotor blades 9 are connected to a hub 10 of the wind turbine 1. A shaft (not shown) connects the hub to the generator and the energy passes further through the converter and into the transformer 5.

The tower 4 is erected on a monopile 6 or any other type of foundation which is driven into a seabed 7 and is partly above the level of seawater 8. The monopile 6 constitutes a foundation of the wind turbine. The tower 4 may be connected, via a transition piece (not shown), to the foundation of the wind turbine.

The tower 4 comprises a plurality of sections 11, 12, 13, 14. In the present example, the tower 4 comprises a bottom tower section 11, two middle tower sections 12, 13, and a top tower section 14. By way of example only, the number of tower section corresponds to four. However, the number of tower sections may be higher or lower. The tower sections 11, 12, 13, 14 include each one or more upper flanges 15u bolted to a corresponding lower flange 151 of another tower section 11, 12, 13, 14. Further, the bottom tower section 11 of the tower 4 includes a flange 16 connected with the monopile 6.

The tower 4 comprises inside one or more platforms 17, 18, 19, 20. The platforms 17, 18, 19, 20 may be bolt platforms configured for a worker to bolt the corresponding tower sections 11, 12, 13, 14 to each other, as well as to the nacelle 3 and the monopile 6 when assembling the tower 4.

The transformer 5 constituting a first high voltage (HV) component is electrically connected to a second high voltage (HV) component (not shown) in the tower bottom or foundation of the wind turbine 1 by means of a HV cable arrangement 21. The HV cable arrangement 21 is divided into a plurality of cable arrangement segments 22, 23, 24, 25, 26. In the present embodiment, the plurality of cable arrangement segments 22, 23, 24, 25, 26 corresponds to the plurality of tower sections 11, 12, 13, 14 plus one as the transformer is placed within the nacelle 3 on top of the tower 4. However, the plurality of cable arrangement segments 22, 23, 24, 25, 26 can be less than the plurality of tower sections 11, 12, 13, 14.

Respective two of the cable arrangement segments 22, 23, 24, 25, 26 are connected via a cable connection device 27, 28, 29, 30 to each other. Each of the cable connection devices 27, 28, 29, 30 is located on a respective platform of the platforms 17, 18, 19, 20 such that the plurality of cable arrangement segments 22, 23, 24, 25, 26 is connected in series to constitute the HV cable arrangement 21 within the tower 4. In the present example, the HV cable arrangement 21 and each of the cable arrangement segments 22, 23, 24, 25, 26 are a multi-phase cable, where all phases of respective two of the multi-phase cables are connected via the cable connection device 27, 28, 29, 30. Alternatively, and not illustrated in the figures, the HV cable arrangement 21 and each or a number of the cable arrangement segments 22, 23, 24, 25, 26 may comprise a plurality of single-phase cables, where each phase of respective two of the single-phase cables are connected via one or more respective cable connection devices.

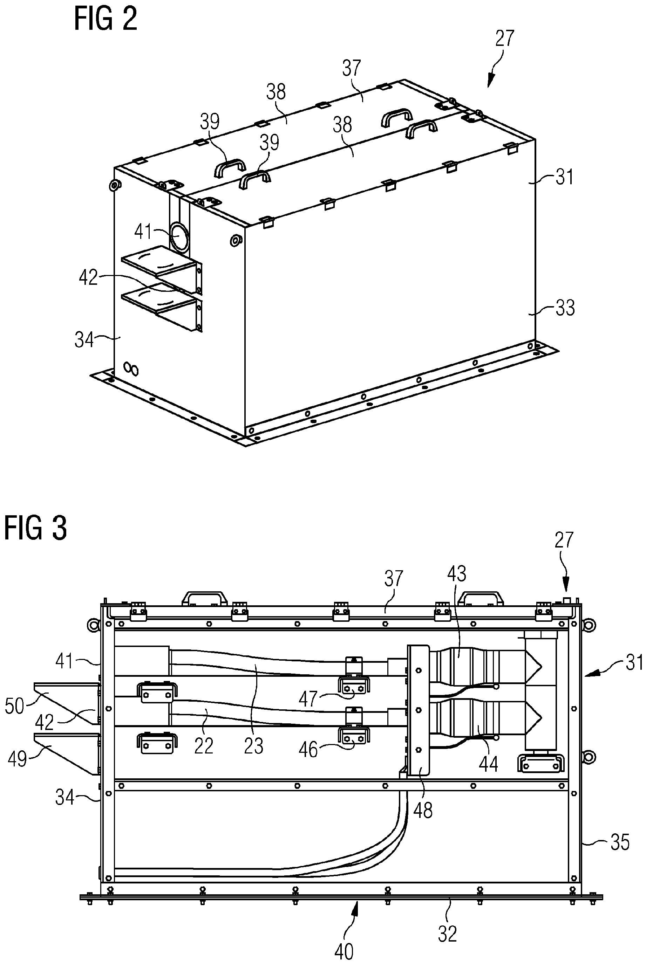

Each of the cable connection devices 27, 28, 29, 30 comprises a plate-based shielding shaped as a metal plate-based box as illustrated in Figs. 2 and 3. Figs. 2 and 3 show the cable connection device 27 connecting the cable arrangement segments 22, 23 on platform 17 of tower section 11. The constitution of the other cable connection devices 28, 29, 29 corresponds to the embodiment described hereinafter.

As can be seen from the perspective view of Fig. 2, the cable connection device 27 has a cabinet 31. The cabinet 31 is composed of a bottom panel 32 (Fig. 3), sidewalls 33, 34, 35 and a top panel 37. The cabinet 31 is closed on all sides, except for the bottom. The top panel 37 has a maintenance door 38 or any other flap for having access to the interior of the cabinet 31. In the present example, the top panel 37 consists of two maintenance doors 38 being operable by respective door handles 39. Alternatively or additionally, the maintenance door(s) and/or flap(s) may be on one or more side panels 33, 34, 35. As a further alternative, the side panels 33, 34, 35 and/or the top panel 37 may be removable by means of unlocking screws or bolts with a tool or by removing locking or interlocking devices.

The cabinet 31 comprises a first cable bushing 41 and a second cable bushing 42. The first and second cable bushings are, by way of example only, arranged in the side panel 34. As can be seen from the side view of Fig. 3 in which the side panel 33 is removed, the cable arrangement segments 22, 23 are guided through the first and second cable bushings 41, 42. Respective ends of the cable arrangement segments 22, 23 are connected to end terminations 43, 44 such that the arrangement segments 22, 23 are connected in series with each other.

As can be seen from Fig. 3, the cable arrangement segments 22, 23 are mechanically fixed by clamps 46, 47 inside the cabinet 31. The end terminations 43, 44 may be HV end terminations according to known standards. The end terminations 43, 44 may be configured with a grounding profile 48. On the outside of the side panel 34 holding platforms 49, 50 are located below the first and second cable bushings 41, 42 to provide mechanical support to the cable arrangement segments 22, 23 when being guided into the interior of the cable connection device 27.

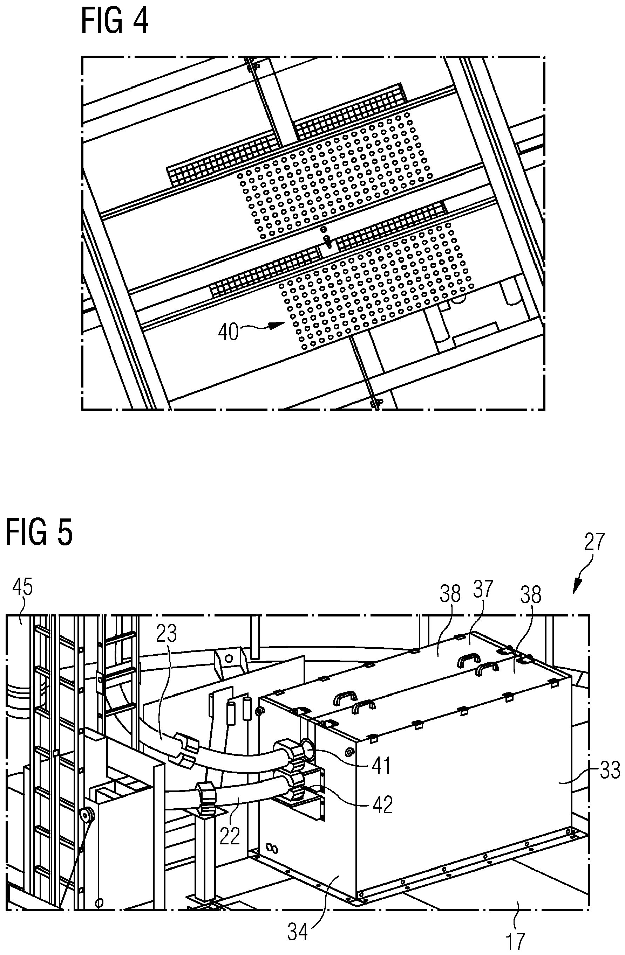

The platform 17, 18, 19, 20 has one or more openings in the area where the cabinet 31 and its bottom plate 32, respectively, are arranged. The bottom panel 32 comprises a pressure release mechanism 40 which can be seen from the bottom view of Fig. 4. Hence, the pressure release mechanism 40 in the bottom panel 32 corresponds to the one or more openings in the platform 17, 18, 19, 20 on which the cable connection device 27 is located.

The pressure release mechanism 40 may be in the form of a perforated plate as shown in Fig. 4. Alternatively or additionally, the pressure release mechanism 40 may comprise an explosion hatch and/or a relief of overpressure or a simple opening.

In event of an arc flash blast, this can be directed in a direction below the cable connection device 27. As the platform 17 is in the upper portion of the tower section 11, there is enough space within the tower section 11 through which the energy can be released without damaging components or causing danger to people being within the tower section 11.

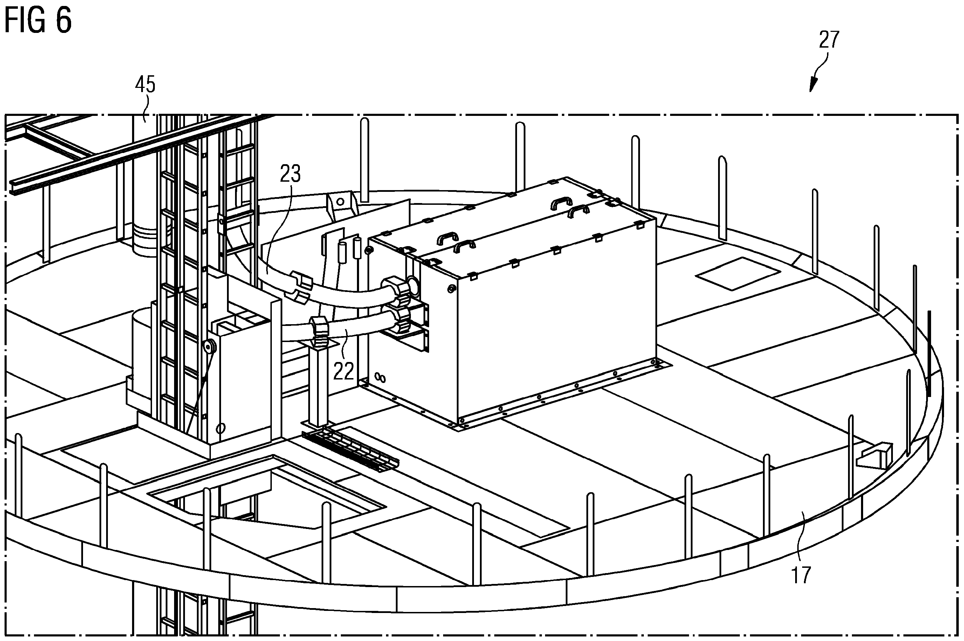

As can be seen from the perspective views of Figs. 5 and 6, the cable arrangement segments 22, 23 are guided through vertical struts 45 through the tower section. After having entered the adjacent tower section, the free end is guided through a respective cable bushing into the next cable connection device located in the adjacent tower section or being directly connected to a HV component further up or down the wind turbine or foundation.

The plate-based casing 31 facilitates the final installation of the HV cable arrangement 21 and provides a safe shield in the event of an arc flash accident during operation. The shielding of the cabinet 31 (casing) prevents access to the parts inside the cabinet 31, prevents against mechanical impact from the outside and controls the effects of faults inside the cabinet 31.

While the present embodiments have two cable arrangement segments entering the cabinet 31, the number of cable arrangement segments entering the casing 31 may be chosen different therefrom.

The described configuration enables pre-installing the HV cable arrangement segments in one or more pre-assembled structured tower sections and merge those at a given destination, i.e., at the offshore installation site. As an advantage from the ability to pre-manufacturing, assembly and test of the HV cable installation in the required tower sections may be made in an early part of the supply chain where these procedures are less costly than on the final wind turbine installation site. The pre-installed cable arrangement segments in the cable connection device allows for fast, safe, and easy assembly of the cable arrangement.

The cable connection device provides the advantage of a safe operational environment around the facility and controls the safety risk in the event of an arc flash scenario. The cable connection device can be installed on one or more locations in the wind turbine structure. The cable connection device covers cable end terminations, as well as the complete cable breakout (cable bushings). This greatly reduces the risk of damaging the equipment during installation.

Thus, installation flexibility and reduced costs are provided with the suggested wind turbine.

## Claims

1. A wind turbine (1), comprising
- a tower (4) composed of a plurality of tower sections (11-14);
- an upper section on top of the tower (4), the upper section having a nacelle (3) and a rotor (2) with rotor blades (9), the rotor (2) being attached to the nacelle (3) and the rotor blades (9) being rotatable by wind around a horizontal rotor axis to drive a generator (5) in the nacelle (3);
- a HV cable arrangement (21) laid in the tower (4) connecting a first HV component in the nacelle and a second HV component in a wind turbine tower bottom or foundation, the HV cable arrangement (21) being divided into a plurality of cable arrangement segments (22-26) corresponding to the plurality of tower sections (11-14), where respective two of the cable arrangement segments (22-26) are connected via a cable connection device (27-30) such that the plurality of cable arrangement segments (22-26) is connected in series to constitute the HV cable arrangement (21);
**characterized in that**
- the cable connection device (27-30) comprises a plate-based shielding.

2. The wind turbine according to claim 1, wherein the cable connection device (27-30) has a cabinet (31) composed of a bottom panel (32), at least one side wall (33, 34), and a top panel (37).

3. The wind turbine according to claim 2, wherein the cabinet is closed and has a maintenance door (38) or flap for having access to its interior.

4. The wind turbine according to claim 2 or 3, wherein the cabinet comprises a pressure release mechanism (40).

5. The wind turbine according to claim 4, wherein the pressure release mechanism (40) is in the bottom panel (32).

6. The wind turbine according to claim 4 or 5, wherein the pressure release mechanism (40) comprises a perforated plate and/or an explosion hatch and/or a relief of over pressure.

7. The wind turbine according to one of claims 2 to 6, wherein the cabinet (31) of the cable connection device (27-30) comprises a first cable bushing (41) through which a first cable arrangement segment (22-25) is guided into the interior of the cable connection device (27-30) and a second cable bushing (42) through which a second cable arrangement segment (23-26) is guided into the interior of the cable connection device (27-30), where the first cable arrangement segment (22-25) and the second cable arrangement segment (23-26) are electrically connected with each other using an end termination (43) within the cable connection device (27-30).

8. The wind turbine according to claim 7, wherein the first and the second cable bushings (41, 42) are in the same or different side panels of the cabinet (31).

9. The wind turbine according to one of claims 1 to 8, wherein the HV cable arrangement (21) and each of the cable arrangement segments (22-26) comprise a multi-phase cable, where all phases of respective two of the multi-phase cables are connected via the cable connection device (27-30).

10. The wind turbine according to one of claims 1 to 8, wherein the HV cable arrangement (21) and at least one of the cable arrangement segments (22-26) comprise a plurality of single-phase cables, where each phase of respective two of the single-phase cables are connected via a respective cable connection device (27-30).

11. The wind turbine according to one of claims 1 to 10, wherein each of the tower sections (11-14) has an upper flange (15u) and a lower flange (151), the upper flange (15u) of a first tower section and the lower flange (151) of a second tower section being fixed to each other thereby providing a platform (17-20) in the tower (4), where the cable connection device (27-30) is located on the platform (17-20).

12. The wind turbine according to claim 11, wherein the platform has one or more openings corresponding to the pressure release mechanism (40) of the bottom panel (32).
